# EUROPÄISCHE PATENTSCHRIFT

(11) **EP 0 773 134 B1**
(45) Veröffentlichungstag und Bekanntmachung des Hinweises auf die Patenterteilung: **20.06.2001**
(21) Anmeldenummer: 96112697.6
(22) Anmeldetag: 07.08.1996
(51) Int. Cl.: B60N 2/24

(54) **Fahrzeugsitz**
Vehicle seat
Siège de véhicule

(30) Priorität: 08.11.1995 DE 19541567
(43) Veröffentlichungstag der Anmeldung: 14.05.1997
(73) Patentinhaber: Recaro Aircraft Seating GmbH & Co., 74523 Schwäbisch Hall (DE)
(72) Erfinder: Beermann, Frank, 73230 Kirchheim/Teck (DE)
(74) Vertreter: Patentanwälte Bartels und Partner

(56) Entgegenhaltungen:
- WO-A-82/01984
- US-A- 1 303 043
- US-A- 2 505 687
- US-A- 4 440 443
- US-A- 4 915 120

## Beschreibung

Die Erfindung betrifft einen Fahrzeugsitz, insbesondere einen Fluggast- oder Omnibussitz, mit einer Trennwand gemäß den Merkmalen des Oberbegriffes des Anspruches 1.

Bei den bekannten Fluggastsitzen wird die Trennwand durch eine Platte gebildet, die zwischen zwei benachbarten Fluggastsitzen fest angeordnet ist. Diese Trennwände haben sich jedoch nicht bewährt, weil sie immer dann störend sind, wenn der Sitzbenutzer keine Trennung wünscht.

Durch die gattungsgemäße WO 82 01984 A ist es bei einem Kinderfahrzeugsitz bekannt, als Trennwand in der Gebrauchslage die Form einer den Kopf des Kindes übergreifenden Haube vorzusehen, die wieder abnehmbar auf dem Kinderfahrzeugsitz anordenbar ist. Die Stäbe, die die Trennwand aufgespannt halten, haben dabei die Form je eines Bügels, dessen Jochabschnitt parallel zur Lehnenoberkante verläuft, wobei die freien Enden der beiden Schenkel jedes Bügels um eine in Sitzquerrichtung verlaufende Achse schwenkbar zu der Rückenlehne des Fahrzeugsitzes angeordnet sind, so daß das faltbare Material sich sowohl von Jochabschnitt zu Jochabschnitt als auch von Schenkel zu Schenkel unmittelbar benachbarter Bügel erstreckt. Die dahingehend bekannte Anordnung erlaubt im Bedarfsfall eine Trennung zwischen zwei benachbarten Fahrzeugsitzen; nimmt jedoch viel Bauraum am jeweiligen Fahrzeugsitz ein. Auch ist eine rasche Einhandbedienung ohne Hilfe eines Dritten nicht immer möglich.

Ausgehend von diesem Stand der Technik liegt der Erfindung die Aufgabe zugrunde, einen Fahrzeugsitz zu schaffen, der es dem Sitzbenutzer ermöglicht, eine Trennung im Bedarfsfall rasch und ohne großen Aufwand vorzusehen, und ohne daß viel Einbauraum am Sitz verbraucht wird. Diese Aufgabe löst ein Fahrzeugsitz mit den Merkmalen des Anspruches 1.

Dadurch, daß gemäß dem kennzeichnenden Teil des Anspruches 1 die Trennwand in der Art eines Fächers ausgebildet und seitlich am Sitz angeordnet ist, kann sie raumsparend zusammengefaltet oder aufgerollt werden, wodurch sie dann, wenn sie nicht benötigt wird, nicht störend in Erscheinung tritt. Dennoch ist in der Gebrauchslage die Schutzwirkung in vollem Umfang vorhanden, weil dank der beweglichen Stäbe das die Wand bildende Material in der gewünschten flächigen Form gehalten werden kann, und daß Einnehmen der dahingehenden Gebrauchslage läßt sich rasch mit geringem Aufwand verwirklichen. Vorzugsweise erstreckt sich die Trennwand in der Gebrauchslage von der Rückenlehne bis zur Armlehne.

Bei einer bevorzugten Ausführungsform ist die Trennwand in der Art eines Fächers ausgebildet und seitlich am Sitz angeordnet. Vorzugsweise erstreckt sich dabei die Trennwand in der Gebrauchslage von der Rückenlehne zur Armlehne.

Die Trennwand kann im gefalteten Zustand seitlich neben der Rückenlehne angeordnet sein. Besonders vorteilhaft ist jedoch eine Anordnung der Trennwand im gefalteten Zustand in einer Kammer der Armlehne. In dieser Kammer können auf einer in Sitzquerrichtung verlaufenden Achse Lagerelemente drehbar gelagert sein, von denen je eines am einen Ende jedes geradlinigen Stabes vorgesehen ist. Der Sitzbenutzer braucht dann nur den obersten Stab zu erfassen und bis zur Rückenlehne zu schwenken, wo er mit der Rückenlehne verbindbar ist, um die Trennwand aufzuspannen.

Für das Entfalten und Zusammenfalten der Trennwand kann, beispielsweise an der Armlehne, ein Betätigungselement vorgesehen sein, dessen Bewegung über eine Antriebsvorrichtung, beispielsweise eine biegsame Welle, auf eine Schwenkvorrichtung für die Stäbe der Trennwand übertragen wird.

Im folgenden ist die Erfindung anhand eines in der Zeichnung dargestellten Ausführungsbeispieles im einzelnen erläutert. Es zeigen
- Fig. 1: eine perspektivisch dargestellte Ansicht eines Ausführungsbeispiels mit sich in der Gebrauchslage befindender Trennwand,
- Fig. 2: eine Ansicht entsprechend Fig. 1 des Ausführungsbeispiels mit sich in einem Stauraum der Armlehne befindender Trennwand.

Bei einer Fluggastsitzreihe mit zwei nebeneinander angeordneten Sitzen 1 und 2 weist die zwischen diesen beiden Sitzen vorhandene Mittelarmlehne 3 eine sich in ihrer Längsrichtung erstreckende Kammer 4 auf, die als Stauraum für eine Trennwand 5 dient, während letztere nicht benötigt wird.

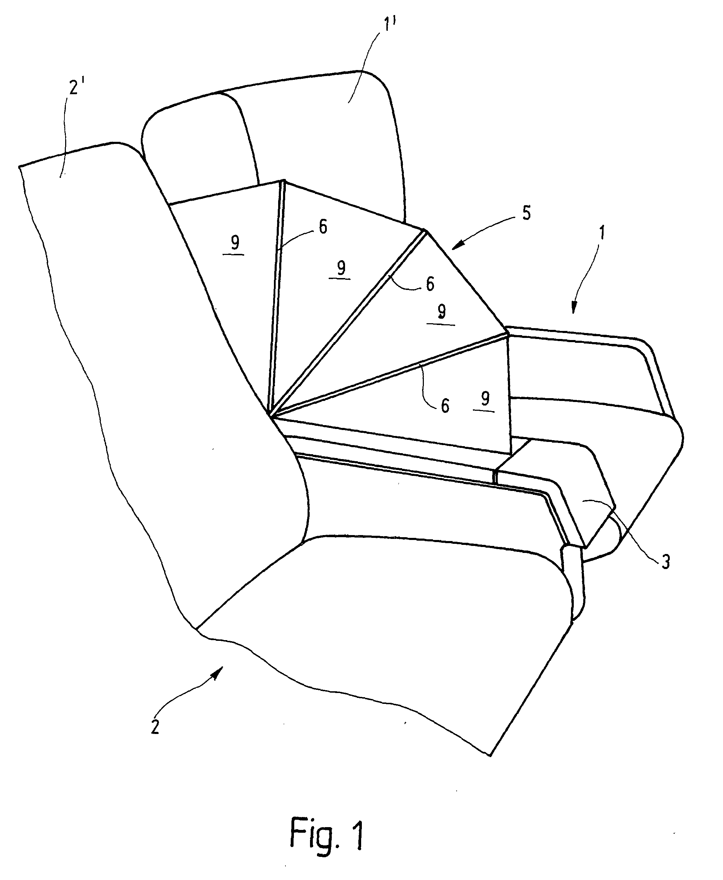

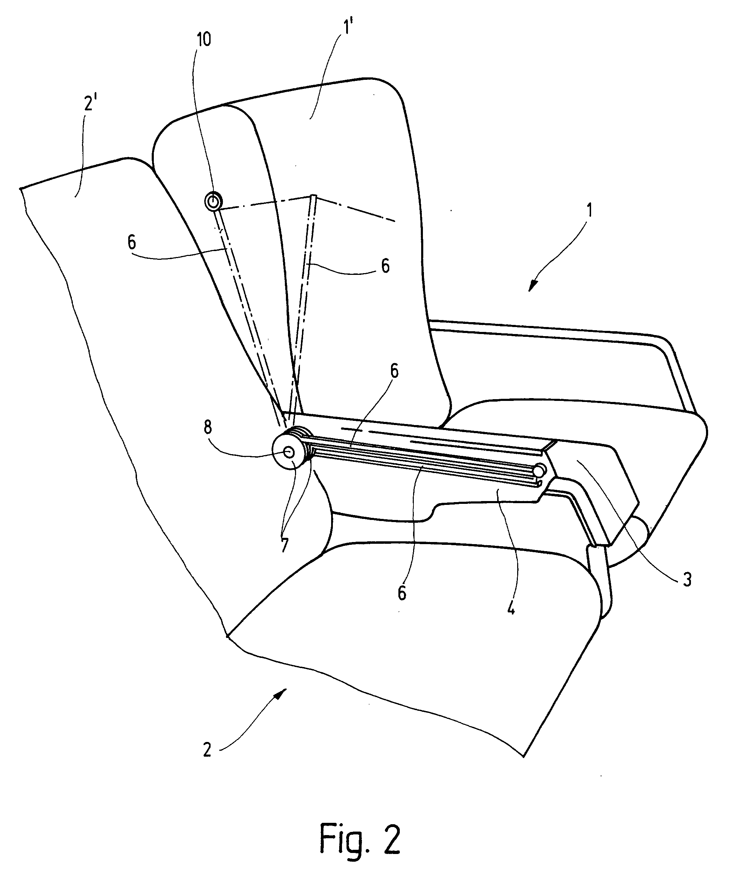

Wie insbesondere Fig. 1 zeigt, weist die Trennwand 5 eine Mehrzahl von geradlinigen Stäben 6 auf, bei denen es sich im Ausführungsbeispiel um Profilstäbe aus Leichtmetall handelt. Die Länge dieser Stäbe 6 ist den Bedürfnissen angepaßt. Die Länge der Stäbe 6 kann gleich, aber auch unterschiedlich sein. Wie Fig. 2 zeigt, ist am einen Ende jedes Stabes 6 eine Scheibe 7 vorgesehen, von welcher der Stab 6 im wesentlichen in radialer Richtung absteht. Alle Scheiben 7 sind nebeneinander drehbar auf einem in Sitzquerrichtung verlaufenden Lagerzapfen 8 angeordnet. Zwischen jeweils zwei aufeinanderfolgenden Stäben 6 ist ein dreieckförmiges Stück 9 eines faltbaren, flexiblen Materials angeordnet. Es kann sich bei diesem Material beispielsweise um ein Gewebe oder eine Folie handeln. Wesentlich ist nur, daß das Material faltbar und vollständig oder im gewünschten Umfang undurchsichtig ist. Die Stücke 9 sind längs ihrer beiden Längsseiten mit den Stäben 6 verbunden.

Wenn die aus den Stücken 9 und den Stäben 6 bestehende Trennwand 5 nicht benötigt wird, ist sie in der Kammer 4 untergebracht. Die Stücke 9 liegen in der Kammer 4 im gefalteten Zustand, und die Stäbe 6 erstrecken sich von dem im Bereich des hinteren Endes der Kammer 4 der Mittelarmlehne 3 vorgesehenen Lagerzapfen 8 nach vorne. Um die Trennwand 5 in die Gebrauchslage zu bringen, braucht der Sitzbenutzer nur den ersten, oben in der Kammer 4 liegenden Stab 6 zu erfassen und zwischen den beiden Rückenlehnen 1' und 2' der Sitze 1 bzw. 2 nach oben und hinten zu schwenken. Wie Fig. 2 zeigt, ist an der der Rückenlehne 2' zugekehrten Seite der Rückenlehne 1' ein Befestigungselement 10 vorgesehen, bei dem es sich im Ausführungsbeispiel um den einen Teil einer Druckknopfverbindung handeln kann. Mittels dieses Befestigungselementes 10 wird der erste Stab 6 mit der Rückenlehne 1' verbunden. Wie Fig. 1 zeigt, werden bei der Bewegung des ersten Stabes 6 in die mit der Rückenlehne 1' verbindbare Lage die Stücke 9 und die übrigen Stäbe 6 aus der Kammer 4 herausgezogen und dabei die Stücke 9 wie bei einem Fächer aufgespannt. Der letzte, in Fig. 1 nicht sichtbare Stab 6, der in der Kammer 4 bleibt, ist mit dieser verbunden. Hierdurch kann den Stücken 9 in der Gebrauchslage der Trennwand die gewünschte Spannung gegeben werden.

Wenn die Trennwand nicht mehr benötigt wird, braucht nur die Verbindung zwischen dem ersten Stab 6 und der Rückenlehne 1' gelöst und die Trennwand wieder in der Kammer 4 untergebracht zu werden.

## Patentansprüche

1. Fahrzeugsitz, insbesondere Fluggast- oder Omnibussitz, mit einer Trennwand (5), die aus einem faltbaren oder aufrollbaren Material sowie beweglichen, dieses Material in der Gebrauchslage aufgespannt haltenden Stäben (6) besteht, dadurch gekennzeichnet, daß die Trennwand (5) in der Art eines Fächers ausgebildet und seitlich am Sitz (1) angeordnet ist.

2. Fahrzeugsitz nach Anspruch 1, dadurch gekennzeichnet, daß die Trennwand (5) im gefalteten Zustand in einer Kammer (4) einer Armlehne (3) angeordnet ist.

3. Fahrzeugsitz nach Anspruch 2, dadurch gekennzeichnet, daß in der Kammer (4) auf einer in Sitzquerrichtung verlaufenden Achse (8) Lagerelemente (7) drehbar gelagert sind, von denen je eines am einen Ende jedes der geradlinigen Stäbe (6) vorgesehen ist.

4. Fahrzeugsitz nach Anspruch 3, dadurch gekennzeichnet, daß der am einen Ende der fächerartigen Trennwand (5) vorgesehene Stab (6) mit der Armlehne (3) verbunden und der am anderen Ende vorgesehene Stab (6) mit der Rückenlehne (1') verbindbar ist.

## Claims

1. Vehicle seat, in particular airline passenger seat or bus passenger seat, having a partition wall (5) which comprises a material which can be folded or rolled up and movable rods (6) which hold that material tensioned in the position in which it is used, characterised in that the partition wall (5) is formed in the manner of a fan and is arranged at the side of the seat (1).

2. Vehicle seat according to claim 1, characterised in that the partition wall (5) in the folded state is arranged in a chamber (4) of an arm rest (3).

3. Vehicle seat according to claim 2, characterised in that bearing elements (7) are arranged in the chamber (4) for pivoting on an axis (8), which extends in the transverse direction relative to the seat, and each of the bearing elements (7) is provided at one end of each of the linear rods (6).

4. Vehicle seat according to claim 3, characterised in that the rod (6), which is provided at one end of the fan-like partition wall (5), is connected to the arm rest (3) and the rod (6), which is provided at the other end, can be connected to the back rest (1').

## Revendications

1. Siège de véhicule, en particulier siège d'avion ou d'autocar, avec une cloison de séparation (5), qui est à base d'un matériau pliable ou enroulable et de barres (6) mobiles maintenant ce matériau dans la position d'utilisation, caractérisé en ce que la cloison de séparation (5) est conçue à la façon d'un éventail et est disposée sur le côté du siège (1).

2. Siège de véhicule selon la revendication 1, caractérisé en ce que la cloison de séparation (5) est disposée à l'état plié dans une chambre (4) d'un accoudoir (3).

3. Siège de véhicule selon la revendication 2, caractérisé en ce que dans la chambre (4), sur un axe (8) allant dans le sens transversal du siège, sont logés des éléments d'appui (7) de façon pivotante, dont l'un est prévu sur une extrémité de chacune des barres (6) rectilignes.

4. Siège de véhicule selon la revendication 3, caractérisé en ce que la barre (6) prévue sur une extrémité de la cloison de séparation (5) en forme d'éventail est reliée à l'accoudoir (3) et la barre (6) prévue sur l'autre extrémité peut être reliée à l'accoudoir (1').
